# NEW EUROPEAN PATENT SPECIFICATION

(11) **EP 0 407 661 B2**
(45) Date of publication and mention of the opposition decision: **24.01.1996**
(45) Mention of the grant of the patent: 12.05.1993
(21) Application number: 89201839.1
(22) Date of filing: 11.07.1989
(51) Int. Cl.: C08F 22/40, C08G 73/12

(54) **Biscitraconimide (co)polymer and process for curing biscitraconimides with an anionic catalyst**
Homopolymere oder Copolymere des Biscitraconimid und Verfahren zur Härtung von Biscitraconimiden mit anionischem Katalysator
Polymère ou copolymère de biscitraconimide et procédé de réticulation des biscitraconimides avec un catalyseur anionique

(43) Date of publication of application: 16.01.1991
(73) Proprietor: Akzo Nobel N.V., NL-6824 BM Arnhem (NL)
(72) Inventor: Van Swieten, Andreas Petrus, NL-6883 HM Velp (Gld.) (NL); Talma, Auke Gerardus, NL-7437 AT Bathmen (NL); Hope, Peter, NL-7391 HL Twello (NL)

(56) References cited:
- US-A- 4 100 140
- US-A- 4 568 733
- US-A- 4 644 039

## Description

### BACKGROUND OF THE INVENTION

The invention relates to biscitraconimide (co)polymers, a process for curing biscitraconimides with an anionic catalyst, and to articles of manufacture comprising the biscitraconimide (co)polymers.

Biscitraconimides are known compounds and can be prepared by the methods disclosed in, "The Synthesis of Biscitraconimides and Polybiscitraconimides," Galanti, A.V. and Scola, O.A., Journ. of Poly. Sci.: Polymer Chemistry Edition, Vol. 19, pp. 451-475, (1981), the disclosure of which is hereby incorporated by reference. These biscitraconimides are polymerized to tough amber-colored films that exhibit good thermal stability. In addition, the article points out that NMR analysis shows that the observed ratio of methyl protons at 2.1 ppm. to the methylene protons at 1.6 ppm. in the biscitraconimides is lower than the theoretical ratios for the imide monomers. The difference is explained as being due to a small degree of polymerization that could occur when the acid is dehydrated thermally.

"The Synthesis of Bisitaconamic Acids and Isomeric Bisimide Monomers," Galanti, A.V. et al., Journ. Poly. Sci.: Polymer Chemistry Edition, Vol. 20, pp. 233-239 (1982) also discloses a method for the preparation of biscitraconimides in the form of an isomeric mixture of the citraconic and itaconic imides.

In "The Development of Tough Bismaleimide Resins," Stenzenberger, H.D., et al., 31st International SAMPE Symposium, vol 31, pp. 920-932 (1986) it is disclosed that bismaleimides are prime candidates for carbon fiber reinforced composites because of their properties. However, the article also points out that these materials lend to be brittle. Thus, several attempts have been made to improve the fracture toughness of the bismaleimides. First, the bismaleimides have been cocured with reactive elastomers such as carboxy terminated acrylonitrile-butadiene rubbers. Also, the bismaleimide polymers have been modified with comonomers which copolymerize via a linear chain extension reaction and include both diene type copolymerization reactions and "ene"-type copolymerization reactions. Thirdly, the bismaleimides have been modified with thermoplastic materials. Finally, the bismaleimides have been cured in the presence of ionic curing catalysis such as imidazoles and tertiary amines including diazobicyclo-octane (DABCO).

In "Bismaleimide Resins the Properties and Processing of 'Compimide' BMI Resins," Segal, C.L., et al., 17th Nat. SAMPE Conference 17, pp. 147-160 (1985) formulated bismaleimides are cured with the ionic catalysts DABCO and 2-methylimidazole. It was concluded that, in general, the curing of formulated bismaleimides improved the fracture toughness of the materials due to lower built-in cure stresses. All formulations cured in the presence of a the curing catalyst had been modified previously with a reactive elastomer and were cured in the presence of an allyl-type reactive diluent.

Other curing catalysts for bismaleimides are known as far example in Japanese Laid-Open Application no. 262823/1985 where it is disclosed that an N.N'-bisimide can be cured in the presence of a diamine and a tertiary amine having a pH of at least 10.85. No appreciable difference in the properties of the resins cured with the catalyst could be discerned when compared with the same resins cured in the absence of the catalyst.

European Patent Application 0 108 461 published on May 16, 1984, discloses, in example VI, the curing of bismaleimide resins having therein styrene, diallyl phthalate and acrylic acid. DABCO is employed in the process of making the bismaleimide itself but not in the curing thereof. The products of this example exhibited improved fracture toughness and withstood a maximum strain of 3,9%.

Dutch Patent Application 6,514,767 published in 1966 describes the co-and homopolymerization of bismaleimides and biscitraconimides at high temperatures and under pressure. No copolymers of bismaleimides with biscitraconimides are disclosed. The polymers show good electrical properties and exhibited acceptable thermal stability.

U.S. Patent Number 4,568,733 issued on February 4, 1986, relates to mixed aromatic bismaleimide/aromatic biscitraconimide resins which produce materials which have better handling, processing and thermal properties than materials with individual resins. These resins are thermally cured without a curing catalyst. The incorporation of the biscitraconimide into the bismaleimide generally produced a significant reduction in the elongation percent, however.

US-A-4,100,140 discloses a curable composition comprising polyimides, which may be biscitraconimides, and alkenylphenols or alkenylphenol ethers, and, preferably, a catalyst, e.g., an imidazole derivative. Alkenylphenol compounds are necessary to provide curable compositions having a low melt viscosity. It has not been recognized that the presence of alkenylphenol ethers is not necessary to obtain a low melt viscosity when curable compositions consisting essentially of biscitraconimides and anionic curing agent are provided.

Generally, the bismaleimide resins require difficult processing conditions, exhibit solvent retention in the prepregs, have a high melting point and high curing temperatures are required for the monomer. In addition, the maleimide polymers are often brittle due to the high cross-link density obtained in the network polymers. The foregoing body of prior art reflects the need for bisimide resin systems which are easily processable and exhibit improved mechanical and physical properties.

### SUMMARY OF THE INVENTION

The present invention has for its object to eliminate the foregoing drawbacks of the prior art bisimide resins and to substantially improve the fracture toughness of molded compositions made from bisimide resins. For this purpose the present invention provides curable bisimide compositions consisting essentially of at least one biscitraconimide unit having the general formula 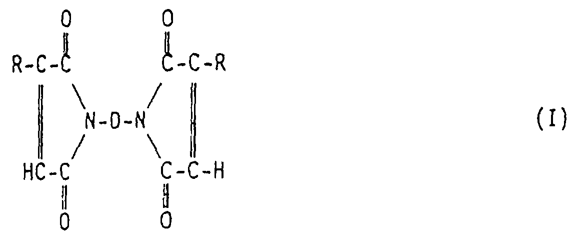 wherein D is a divalent group, R is CH₂-R₁, and R₁ is independently selected from hydrogen and alkyl groups having 1-18 carbon atoms, characterized in that the composition comprises a sufficient amount of an anionic curing catalyst to convert at least 10% of the R groups on the biscitraconimide units into alkylene bridges in the cured composition.

The present invention further provides a process for the preparation biscitraconimide unit-containing (co)polymers having at least 10% of the R groups on the biscitraconimide units converted to alkylene bridges comprising curing the curable compositions containing biscitraconimide units of the formula (I), and provides biscitraconimide(co)polymers having at least 10% of the R groups on the biscitraconimide units converted to alkylene bridges.

These polymeric compositions and the articles of manufacture produced therefrom offer several advantages over prior art bisimide formulations. For example, these aliphatic biscitraconimide-containing materials can be processed at lower temperatures than bismaleimides and the resultant polymers show improved properties including a high T_{g}, good thermostability and the mechanical properties are significantly improved. Most noticeable among the improved mechanical properties is a substantial increase in the tensile strength of the polymers according to the present invention as a result of the formation of alkylene bridges therein.

### DETAILED DESCRIPTION OF THE PREFERRED EMBODIMENTS

Biscitraconimides are known compounds and can be prepared by any of the methods disclosed in Dutch Patent Application No. 6,514,767; "The Synthesis of Biscitraconimides and Polybiscitraconimides", Galanti, A.V., and Scola, D.A., Journ, of Polym. Sci.: Polymer Chemistry Edition, Vol. 19, pp. 451-475 (1981); and "The Synthesis of Bisitaconamic Acids and Isomeric Bisimide Monomers", Galanti, A.V., at al., Journ. of Polym. Sci.: Polymer Chemistry Edition, Vol. 20, pp. 233-239(1982), the disclosures of which are hereby incorporated by reference.

The biscitraconimides employed in the present invention comprise compounds having the formula I: 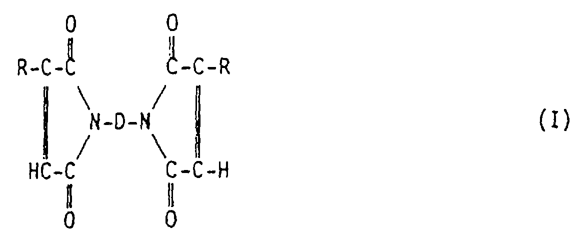 wherein D is a divalent group, R is CH₂-R₁, and R₁ is independently selected from hydrogen and alkyl groups having 1 -18 carbon atoms.

D may be selected from divalent groups including alkylene, cyclicalkylene groups, oligomers of biscitraconimides, and residues of one or more cocurable materials and biscitraconimide oligomers. D is preferably selected from a substituted or unsubstituted aliphatic divalent group. Most preferably D is a divalent group selected from tetramethylene; pentamethylene; hexamethylene; 2-methyl pentamethylene; neopentylene; (2,2,4-trimethyl)hexamethylene; 1,3-bis(methylene)cyclohexane; 4,4'-methylene bis-2-methyl cyclohexane; 2,2-dicyclohexylpropylene; m-xylylene; and tricyclodocecylene. In addition to biscitraconimide units wherein D is a divalent group, some citraconimide units wherein D is a monovalent or trivalent group may also be present. For example, some citraconimide units wherein D is a monovalent or trivalent amine may be present along with biscitraconimide units wherein D is a divalent group.

Suitable aliphatic biscitraconimides are in particular
N,N'-ethylene-biscitraconic imide;
N,N'-hexamethylene-biscitraconic imide;
N,N'-tetramethylene-biscitraconic imide;
N,N'-2-methyl-pentamethylene-biscitraconic imide;
N,N'-propylene-biscitraconic imide;
N,N'-4,4'-dicyclohexylmethane-biscitraconic imide;
N,N'-dicyclohexyl-biscitraconic imide; and
N,N-α,α'-4,4'-dimethylene cyclohexane-biscitraconic imide.

The anionic catalysts employed in the present invention comprise generally known compounds which can be obtained commercially or can be prepared by known synthetic methods. In general, the anionic catalyst must exhibit catalytic activity on the polymerization of biscitraconimide-containing compositions at suitable polymerization temperatures. Anionic catalysts within the scope of the present invention comprise diazo-bicyclo alkanes, diazo-bicyclo alkenes, imidazoles, substituted imidazoles, the alkali salts of organic alcohols, triphenyl phosphine and substituted or unsubstituted aliphatic and aromatic secondary and tertiary amines. The most preferred catalysts for both economic and performance reasons are the diazobicyclo octane, triphenyl phosphine and the imidazoles including 2-methyl imidazole. Other, less preferred catalysts include the alkali metal salts of t-butanol, ethanol, methanol or diols.

The anionic catalyst is present in an amount sufficient to convert at least 10% of the R groups of the formula I, on the biscitraconimide units into alkylene bridges. Typically, 0.01 to 3.0 weight percent of the anionic catalyst is employed. More preferably, 0.1 to 3.0 weight percent is used.

In particular, biscitraconimide compounds of the formula (I) are polymerized into polymers such as the following: 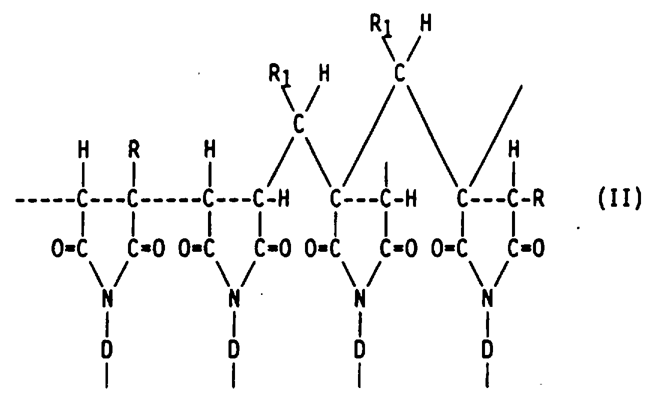 wherein D, R and R₁ have the same meaning as in the formula I. In these polymers there is included, in addition to the expected cross-linking, additional alkylene bridges between the polymer units such as the alkylene bridges shown in the formula II as indicated by the CH-R1 groups. These alkylene bridges may link a carbon atom in the citraconimide unit having an abstractable hydrogen atom attached. The alkylene bridges will always be formed by a linking methylene group which may optionally be substituted by an R₁ group as shown in the formula II.

As is shown in formula II, there are essentially four possibilities with the two leftmost being the linking of the original biscitraconimide units and accounting for the majority of the polymeric units formed by 1,2 or 1,3 addition, and the two rightmost having a spire form, resulting from isomerization of the biscitraconimide units into itaconimide units under the reaction conditions. The itaconic isomerization can account for up to 30% or even slightly more of the units resulting from the present anionic curing process.

At least 10% of the original R groups on the biscitraconimide units are converted to these alkylene bridges in the cured polymer in order to produce novel biscitraconimide polymers having superior properties. More preferably, at least 25%, and most preferably at least 40% of the original R groups are converted to alkylene bridges and nearly 100% of the original biscitraconimide R groups can be converted to alkylene bridges if desirable.

The curable composition may also comprise one or more cocurable materials. Suitable cocurable materials include bismaleimides, citraconic maleimides, itaconic maleimides, citraconic/itaconic maleimides, bis-(allyl trimellitate imides), bisitaconimides, and aromatic or aliphatic amines which may be present in an amount of up to 40% of the composition, and triallyl cyanurate, triallyl isocyanurate, and styrene and styrene derivatives such as α-methylstyrene, indene and diisopropenyl benzene which may be present in an amount of up to 25% of the composition.

The present invention also embodies cured polymeric materials comprising units derived from a biscitraconimide of the formula (I) wherein at least 10% of the R groups on the biscitraconimide units are converted to alkylene bridges. Again, these cured polymeric materials may include units derived from one or more of the cocurable materials specified herein. More preferably, the cured polymeric compound of the present invention has at least 25%, and most preferably at least 40% of the R groups on the biscitraconimide units converted to alkylene bridges.

The curable composition of the present invention must be cured in the presence of an anionic catalyst. The curing is carried out by simply heating a composition containing at least one biscitraconimide of the formula (I), an anionic catalyst and, optionally, a cocurable material, to a temperature above the melting point of the biscitraconimide and maintaining the temperature at that level for a sufficient time to cure the material into a cured polymeric product. Curing can be accomplished at 150°C to 250°C. Generally, the curing will be accomplished at a temperature in excess of 180°C. The curing time will vary depending upon the amount of catalyst present and type of material being cured.

The cured polymeric product of the present invention is particularly useful in fiber-reinforced composites because of its excellent properties. More particularly, the cured compositions of the present invention exhibit a significantly improved flexural strength and tensile strength when compared with known maleimide polymeric compositions. In addition. this improved flexural and tensile strength is obtained without detrimental effects to the other important properties of the material. As a result, a novel composition is obtained which is easily processable due to the low melting points of the aliphatic biscitraconimides. In addition, the aliphatic biscitraconimides have a large melt cure window which allows them to be more readily cocured with a large group of materials which would not be cocurable with bismaleimides because a curing temperature suitable for both the bismaleimide and the cocurable material could not be found. Additionally, the aliphatic biscitraconimide melt itself has a low viscosity which renders it easier to handle than bismaleimide-based melts. Further, the polymerization can be accomplished without the use of solvents and without the formation of volatiles thus allowing the fabrication of void-free polymers.

For applications in the laminate field, it is necessary to make prepregs from the biscitraconimides in order to obtain the desired properties for the laminate. The impregnated fibre cloth must be tack-free, flexible and have the proper melt viscosity. The biscitraconimide monomers themselves are not suitable for these applications since they are either oils or are too crystalline in nature.

It is possible to make prepolymers having the desired properties which can be employed to make prepregs with the distinct advantage that these polymers do not require a solvent in the prepreg manufacturing process. In the present commercial prepreg manufacturing methods, solvents must be employed which leads to costly solvent removal steps and some voids in the final product.

The invention will be further described with reference to the following examples which are not to be construed as limiting the scope of the invention.

### Example 1

50 grams of 1,6-N,N'-hexamethylene biscitraconimide is melted at 140°C. The low viscosity liquid is degassed for 5 minutes with vacuum. After the degassing 1 weight percentage of a catalyst (DABCO, diazo bicycle octane) is added and stirred in very well. The mixture is poured in a preheated mould (130°C) to prepare unreinforced sheets of 10 by 10 by 0.3 cm. The temperature of the mould is slowly increased up to 220°C and held for 5 hours at that temperature. The flexural properties and Tg value measured by DMA of this sheet material are mentioned in Table 1. Further solid state 13C NMR analysis were carried out. A considerable decrease of the methyl group signal of the imide ring and a new methylene signal was found, indicating the occurence of the -CH₂- bridge in this polymer.

### Comparative Example 1a

50 grams of 1,6-N,N'-hexamethylene biscitraconimide is treated by the same procedure as example 1. The catalyst DABCO was substituted by 1 weight percentage of dicumyl peroxide. The result of the measurements are mentioned in Table 1. The solid state 13C NMR spectra for this polymer shows a regular pattern not having a methylene signal.

### Comparative Example 1b

50 grams of 1,6-N,N'-hexamethylene biscitraconimide is treated by the same procedure as example 1. However, no catalyst is added. The molten imide is cured only thermally. The results are mentioned in Table 1. The solid state 13C NMR resemble those of the polymer formed by peroxide initiated polymerization (Example 1a).

**Table 1**

| Properties of cured 1,6-N,N'-hexamethylene biscitraconimides, cured 5 hours at 220°C. | | | | | |
|---|---|---|---|---|---|
| Example | Curing method | Flexural properties | | Tg (DMA) °C | TGA % loss at 400°C |
| | | E-mod GPa | strain % | | |
| 1 | 1% DABCO | 2.7 | >8 | 190 | 3.7 |
| 1a | 1% DCP | 3.2 | 4 | 180 | 5.6 |
| 1b | thermally | 3.3 | 3.5 | 100 | 6.7 |

### Preparation of glass reinforced sheet material by resin transfer moulding.

### Example 2

To prepare a 1.6 mm thick glass reinforced sheet material 10 plies of glass fabric with imide-compatible sizing are placed in a plain mould. The mould is closed and heated up to 130°C. A molten mixture of 1,6-N,N'-hexamethylene biscitraconimide and 1% DABCO is injected with a pressure of 3 bar. The mould is filled within 3 minutes. The reinforced sheet is cured at the standard temperature program of example 1. The composite material contained 35% of glass and showed, in the bending test, an elongation at break of 3.1% which corresponded with the expected value for the glass fibre.

### Copolymerisations

### Example 3

A mixture of 40 grams of 1,6-N,N'-hexamethylene biscitraconimide and 10 grams of N,N'-methylene dianiline bismaleimide is melted at 140°C. After degassing 1 weight percentage of DABCO is added. As described in example 1 the mixture is poured in a preheated mould and cured at 220°C. The flexural properties are determined and mentioned in Table 2. The 13C solid state NMR analysis show a considerable decrease of the intensity of the signal of the methyl group of the imide ring to about 30% of the original value and a new methylene signal was observed.

### Comparison Example 3a

As described in example 3 the mixture of 1,6-N,N'-hexamethylene biscitraconimide and N,N'-methylene dianiline bismaleimide is melted. The mixture is cured without added catalyst DABCO. The flexural strain at failure lies at a much lower level (Table 2). No methylene signal is observed.

**Table 2**

| Properties of cured mixtures of 80 % of 1,6-N,N'-hexamethylene biscitraconomide and 20% of N,N'-methylene dianiline bismaleimide. | | | |
|---|---|---|---|
| Example | Curing method | Flexural properties | |
| | | Emod GPa | strain % |
| 3 | 1% DABCO | 2.6 | 12 |
| 3a | - | 3.3 | 3 |

### Example 4

Cured unreinforced sheet material is made of 40 grams of 1,6-N,N'-hexamethylene biscitraconimide as described in example 1. Instead of DABCO, 1% of 2-methyl imidazole has been added. The flexural properties are on the same level. The 13C solid state NMR analysis shows a spectra comparable to that of example 1.

### Example 5

Cured unreinforced sheet material is made of 40 grams of 1,6-N,N'-hexamethylene biscitraconimide as described in example 1. Instead of DABCO, 2 weight percent of trioctyl amine has been added.

The flexural properties and the 13C solid state NMR spectra are comparable with those of example 1.

### Example 6

Cured unreinforced material has been made of 40 grams 1,6-N,N'-hexamethylene biscitraconimide by melting and curing at 230°C. As a catalyst, triphenyl phosphine has been added. The intensity of the signal of the C-atom of the methyl group, measured by solid state 136 NMR, has been decreased and a new methylene signal is observed.

### Example 7

### Preparation of Biscitraconimide Oligomers and Prepregs Thereof

A mixture of 25 grams of 1,6-N,N'-hexamethylene and 75 grams of 1,5-N,N'-2-methyl-pentamethylene biscitraconimide and 16 grams of diamine diphenyl sulphone are melted and kept for 4 hours at 180°C. Alter cooling to 120°C 1% DABCO is added. Impregnation of a glass fabric (200 grams/square meter) at this temperature results in a prepreg containing about 50% resin. The prepregs, non-tacky and flexible, can be used for laminating. The cure cycle used to make the prepreg was 2 hours at 200°C with a postcure of 4 hours at 230°C.

### Example 8

### Preparation of Biscitraconimide Oligomers by Radical Polymerization

A mixture of 100 grams of 1,6-N,N'-hexamethylene biscitraconimide, 5 grams of styrene and 5 grams of dicumyl peroxide in 500 ml. of xylene was heated at 140°C for 16 hours. After the reaction was complete, the xylene was evaporated and a clear product was obtained. The material is non-tacky and rubber-like at room temperature and has a viscosity at 120-140°C suitable for melt impregnation of fabrics. A mixture of this material and 1 weight percent of DABCO is used for the preparation of prepregs.

The foregoing description and examples of the invention have been presented for the purpose of illustration and description only and are not to be construed as limiting the invention to the precise forms disclosed. The scope of the invention is to be determined from the claims appended hereto.

## Claims (Claims for the following Contracting State(s): BE, CH, DE, FR, GB, IT, LI, SE)

1. A curable composition consisting essentially of at least one biscitraconimide unit having the formula 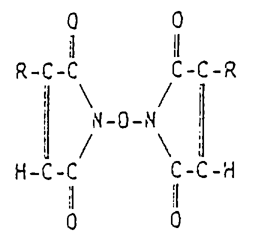 wherein D is a divalent groups, R is CH₂-R₁, and R₁ is selected from the group consisting of hydrogen and alkyl groups having 1 to 18 carbon atoms, characterized in that the composition comprises 0.01 to 3.0 weight percent of an anionic curing catalyst to convert at least 10% of the R groups on the biscitraconimide units into alkylene bridges in the cured composition.

2. A curable composition as claimed in claim 1 further comprising up to 40 molar percent based on the moles of biscitraconimide of one or more (co)curable compounds selected from the group consisting of bismaleimides. citraconic maleimides, itaconic maleimides, citraconic/itaconic imides. bis-(allyl trimellitate imides), bisitaconimides, and aromatic or aliphatic amines.

3. A curable composition as claimed in claim 2 wherein the (co)curable compounds up to 25 molar percent of the composition based on the moles of biscitraconimide and may additionally be selected from the group consisting of triallyl cyanurate, trially isocyanurate styrene, and styrene derivatives, indene, and diisopropenylbenzene.

4. A curable composition as claimed in claims 1-3 wherein D is selected from the group consisting of substituted or unsubstituted divalent aliphatic groups, oligomers of biscitraconimides and residues of one or more cocurable materials and biscitraconimide oligomers.

5. A curable composition as claimed in claims 1-4 which comprises 0.01 to 3.0 weight percent of an anionic curing catalyst selected from the group consisting of diazobicyclo alkanes, substituted imidazoles, the alkali salt of t-butanol, methanol, ethanol and triphenyl phosphine.

6. A curable composition as claimed in claims 1 - 4 wherein 0.01 to 3.0 weight percent of anionic curing catalyst is present to convert at least 40% of the R groups on the biscitraconimide units into alkylene bridges in the cured composition.

7. A process for the preparation of a (co)polymer containing at least one unit derived from a biscitraconimide, characterized in that a composition according to one or more of claims 1 - 6 is cured at a temperature above the melting point at the biscitraconimide unit.

8. An article of manufacture obtained by curing one or more of the compositions according to claims 1-6.

9. An article of manufacture according to claim 8 further comprising fibrous reinforcement.

10. A prepreg obtained by impregnating fibers with one or more of the compositions of claims 1-6 and curing the impregnated material at an elevated temperature.

11. A polymeric composition consisting essentially of at least two units derived from a biscitraconimide having the formula: 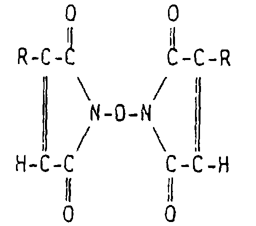 wherein D is a divalent group, R is CH₂-R₁ and R₁ is independently selected from the group consisting of hydrogen and alkyl groups having 1-18 carbon atoms, characterized in that at least 10% of the R groups on the biscitraconamide units are converted to alkylene bridges in the polymeric composition.

12. A polymeric composition as claimed in claim 11 wherein the polymeric composition further comprises up to 40 molar percent of units derived from one or more (co)curable compounds selected from the group consisting of bismaleimides, bisitaconimides, itaconic maleimides, citraconic maleimides, itaconic/citraconic imides, bis-(allyl trimellitate imides), and aliphatic or aromatic diamines.

13. A polymeric composition as claimed in claim 11 wherein the polymeric composition further comprises up to 25 molar percent of units derived from one or more (co)curable compounds selected from the group consisting of triallyl cyanurate, triallyl isocyanurate, styrene, and styrene derivatives, indene and diisopropenyl benzene.

14. A polymeric composition as claimed in any one of claims 11 or 12 wherein D is a divalent group selected from the group consisting of tetramethylene; pentamethylene; hexamethylene; 2-methyl pentamethylene; neopentylene; (2,2,4-trimethylthexame)hylene; 1,3-bis(methylene)cyclohexane; 4,4'-methylene bis-2-methyl cyclohexane; 2,2-dicyclohexylpropylene; meta-xylylene and tricyclododecylene.

15. A polymeric composition as claimed in any of claims 11-13 wherein at least 40% of the R groups on the biscitraconimide units are converted to alkylene bridges in the polymeric composition.

## Claims (Claims for the following Contracting State(s): ES)

1. A process for making a (co)polymer from a curable composition consisting essentially of at least one biscitraconimide unit having the formula 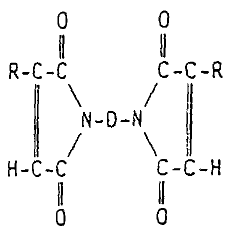 wherein D is a divalent group, R is CH₂-R₁, and R₁ is selected from the group consisting of hydrogen and alkyl groups having 1 to 18 carbon atoms, characterized in that the composition is cured at a temperature above the melting point of the biscitraconimide unit and in the presence of 0.01 to 3.0 weight percent of an anionic curing catalyst to convert at least 10% of the R groups on the biscitraconimide units into alkylene bridges in the cured composition.

2. A process for making a (co)polymer from a curable composition as claimed in claim 1, wherein the composition further comprises up to 40 molar percent, based on the moles of biscitraconimide, of one or more (co)curable compounds selected from the group consisting of bismaleimides, citraconic maleimides, itaconic maleimides, citraconic/itaconic imides bis-(allyl trimellitate imides), bisitaconimides, and aromatic or aliphatic amines.

3. A process for making a (co)polymer from a curable composition as claimed in claim 2, wherein the (co)curable compounds comprise up to 25 molar percent of the composition based on the moles of biscitraconimide and may additionally be selected from the group consisting of triallyl cyanurate, triallyl isocyanurate, styrene, and styrene derivatives, indene, and diisopropenyl benzene.

4. A process for making a (co)polymer from a curable composition as claimed in claims 1-3, wherein D is selected from the group consisting of substituted of unsubstituted divalent aliphatic groups, oligomers of biscitraconimides and residues of one or more cocurable materials and biscitraconimide oligomers.

5. A process for making a (co)polymer from a curable composition as claimed in claims 1-4, wherein the anionic curing catalyst is selected from the group consisting of diazobicyclo alkanes, substituted imidazoles, the alkali salt of t-butanol, methanol, ethanol and triphenyl phosphine.

6. A process for making a (co)polymer from a curable composition as claimed in claims 1-4, wherein 0.01 to 3.0 weight percent of anionic curing catalyst is present to convert at least 40% of the R groups on the biscitraconimide units into alkylene bridges in the cured composition.

7. A process according to claims 1-6, wherein the curable composition further comprises fibrous reinforcement.

8. A process according to claims 1-6, further comprising the step of impregnating fibers with the curable composition and curing the impregnated material at an elevated temperature.

9. A process of using a polymeric composition consisting essentially of at least two units derived from a biscitraconimide having the formula: 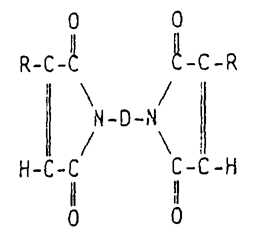 wherein D is a divalent group, R is CH₂-R₁ and R₁ is independently selected from the group consisting of hydrogen and alkyl groups having 1-18 carbon atoms, wherein at least 10% of the R groups on the biscitraconimide units are converted to alkylene bridges in the polymeric composition.

10. A process of using a polymeric composition as claimed in claim 9, wherein the polymeric composition further comprises up to 40 molar percent of units derived from one or more (co)curable compounds selected from the group consisting of bismaleimides, bisitaconimides, itaconic maleimides, citraconic maleimides, itaconic/citraconic imides, bis-(allyl trimellitate imides), and aliphatic or aromatic diamines.

11. A process of using a polymeric composition as claimed in claim 9, wherein the polymeric composition further comprises up to 25 molar percent of units derived from one or more (co)curable compounds selected from the group consisting of triallyl cyanurate, triallyl isocyanurate, styrene, and styrene derivatives, indene, and diisopropenyl benzene.

12. A process of using a polymeric composition as claimed in any one of claims 9 or 10 wherein D is a divalent group selected from the group consisting of tetramethylene; pentamethylene; hexamethylene; 2-methyl pentamethylene; neopentylene; (2,2,4-trimethyl)hexamethylene; 1.3-bis(methylene)cyclohexane; 4,4'-methylene bis-2-methylcyclohexane; 2,2-dicyclohexylpropylene; metaxylylene and tricyclododecylene.

13. A process of using polymeric composition as claimed in any of claims 9-11 wherein at least 40% of the R groups on the biscitraconimide units are converted to alkylene bridges in the polymeric composition.

## Patentansprüche (Patentansprüche für folgende(n) Vertragsstaat(en): BE, CH, DE, FR, GB, IT, LI, SE)

1. Vernetzbare Zubereitung wesentlich bestehend aus mindestens eine Biscitraconimid-Einheit der Formel 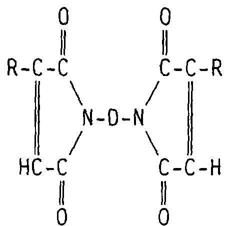 in der D eine zweiwertige Gruppe, R = CH2-R1 und R1 gewählt ist aus der Gruppe bestehend aus Wasserstoff und Alkylgruppen mit 1 bis 18 Kohlenstoffatomen, dadurch gekennzeichnet, dass die Zubereitung 0,01 bis 3,0 Gew.% eines anionischen Vernetzungskatalysators enthält, um mindestens 10 % der R-Gruppen an den Biscitraconimid-Einheiten in Alkylenbrücken in der vernetzten Zubereitung umzuwandeln.

2. Vernetzbare Zubereitung nach Anspruch 1, die ausserdem bis zu 40 Mol%, bezogen auf die Mole Biscitraconimid, einer oder mehrerer (co)vernetzbarer Verbindung gewählt aus der Gruppe bestehend aus den Bismaleimiden, Citraconsäuremaleimiden, Itaconsäuremaleimiden, Citraconsäure/Itaconsäure-Imiden, Bis(allyltrimellitatimiden), Bisitaconimiden und aromatischen oder aliphatischen Aminen enthält.

3. Vernetzbare Zubereitung nach Anspruch 2, in welcher die (co)ver-netzbaren Verbindungen bis zu 25 Mol% der Zubereitung, bezogen auf die Mole an Biscitraconimid, ausmachen und zusätzlich aus der Gruppe bestehend aus Triallylcyanurat, Triallylisocyanurat, Styrol, Styrolderivate, Inden, und Diisopropenylbenzol gewählt werden können.

4. Vernetzbare Zubereitung nach einem der Ansprüche 1 bis 3, in welcher D gewählt ist aus der Gruppe bestehend aus substituierten oder unsubstituierten zweiwertigen aliphatischen Gruppen, Oligomeren von Biscitraconimiden und Resten von ein oder mehreren (co)vernetzbaren Substanzen und Biscitraconimid-oligomeren.

5. Vernetzbare Zubereitung nach einem der Ansprüche 1 bis 4, die 0,01 bis 3,0 Gew.% eines anionischen Vernetzungskatalysators gewählt aus der Gruppe bestehend aus Diazobicycloalkanen, substituierten Imidazolen, dem Alkalisalz von t-Butanol, Methanol, Ethanol und Triphenylphosphin enthält.

6. Vernetzbare Zubereitung nach einem der Ansprüche 1 bis 4, in welcher 0,01 bis 3,0 Gew.% des anionischen Vernetzungskatalysators vorhanden sind, um mindestens 40 % der R-Gruppen der Biscitraconimid-Einheiten in Alkylenbrücken in der vernetzten Zubereitung umzuwandeln.

7. Verfahren zur Herstellung eines (Co)polymers, das mindestens eine von einem Biscitraconimid abgeleitete Einheit enthält, dadurch gekennzeichnet, dass eine Zubereitung nach einem oder mehreren der Ansprüche 1 bis 6 bei einer Temperatur oberhalb des Schmelzpunktes der Biscitraconimid-Einheit vernetzt wird.

8. Gebilde, das durch Vernetzen von einer oder mehreren Zubereitung(en) nach den Ansprüchen 1 bis 6 erhalten ist.

9. Gebilde nach Anspruch 8, das ausserdem eine Faserarmierung enthält.

10. Prepreg, erhalten durch Imprägnieren von Fasern mit einer oder mehreren Zubereitungen(en) der Ansprüche 1 bis 6 und Vernetzen des imprägnierten Materials bei einer erhöhten Temperatur.

11. Polymere Zubereitung wesentlich bestehend aus mindestens zwei Einheiten, die abgeleitet sind von einem Biscitraconimid der Formel 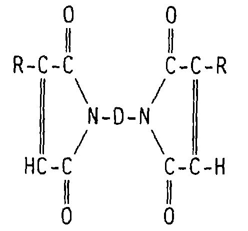 in der D eine zweiwertige Gruppe, R = CH2R1, und R1 unabhängig gewählt ist aus der Gruppe bestehend aus Wasserstoff und Alkylgruppen mit 1 bis 18 Kohlenstoffatomen, dadurch gekennzeichnet, dass mindestens 10 % der R-Gruppen an den Biscitraconimid-Einheiten in Alkylenbrücken in der vernetzten Zubereitung umgewandelt werden.

12. Polymere Zubereitung nach Anspruch 11, bei welcher die polymere Zubereitung ausserdem bis zu 40 Mol% Einheiten enthält, die abgeleitet sind von einer oder mehreren (co)vernetzbaren Verbindung(en) gewählt aus der Gruppe bestehend aus Bismaleimiden, Bisitaconimiden, Itaconsäuremaleimiden, Citraconsäuremaleimiden, Itaconsäure/Citraconsäureimiden, Bis(allyltrimellitatimiden) und aliphatischen oder aromatischen Diaminen.

13. Polymere Zubereitung nach Anspruch 11, in welcher die polymere Zubereitung ausserdem bis zu 25 Mol% Einheiten enthält, die von einer oder mehreren (co)vernetzbaren Verbindung(en) abgeleitet sind, die gewählt sind aus der Gruppe bestehend aus Triallylcyanurat, Triallylisocyanurat, Styrol, Styrolderivate, Inden, und Diisopropenylbenzol.

14. Polymere Zubereitung nach einem der Ansprüche 11 oder 12, in welcher D eine zweiwertige Gruppe ist, die gewählt ist aus der Gruppe bestehend aus Tetramethylen, Pentamethylen, Hexamethylen, 2-Methylpentamethylen, Neopentylen, (2,2,4-Trimethyl)-hexamethylen, 1,3-Bis(methylen)-cyclohexan, 4,4'-Methylen-bis-2-methylcyclohexan, 2,2-Dicyclohexylpropylen, meta-Xylylen und Tricyclododecylen.

15. Polymere Zubereitung nach einem der Ansprüche 11 bis 13, in welcher mindestens 40% der R-Gruppen an den Biscitraconimid-Einheiten in Alkylenbrücken in der polymeren Zubereitung umgewandelt werden.

## Patentansprüche (Patentansprüche für folgende(n) Vertragsstaat(en): ES)

1. Verfahren zur Herstellung eines (Co)polymers aus einer vernetzbaren Zubereitung wesentlich bestehend aus mindestens eine Biscitraconimid-Einheit der Formel 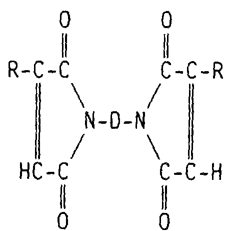 in der D eine zweiwertige Gruppe, R = CH2-R1 und R1 gewählt ist aus der Gruppe bestehend aus Wasserstoff und Alkylgruppen mit 1 bis 18 Kohlenstoffatomen, dadurch gekennzeichnet, dass die Zubereitung bei einer Temperatur über dem Schmelzpunkt der Biscitraconimid-Einheit und in Gegenwart von 0,01 bis 3,0 Gew.% eines anionischen Vernetzungskatalysators polymerisiert wird, um mindestens 10 % der R-Gruppen an den Biscitraconimid-Einheiten in Alkylenbrücken in der vernetzten Zubereitung umzuwandeln.

2. Verfahren zur Herstellung eines (Co)polymers aus einer vernetzbaren Zubereitung nach Anspruch 1, bei welchem die Zubereitung ausserdem bis zu 40 Mol%, bezogen auf die Mole an Biscitraconimid, einer oder mehrerer (co)vernetzbare(n)r Verbindung(en) gewählt aus der Gruppe bestehend aus den Bismaleimiden, Citraconsäuremaleimiden, Itaconsäuremaleimiden, Citraconsäure/Itaconsäure-Imiden, Bis(allyltrimellitatimiden), Bisitaconimiden und aromatischen oder aliphatischen Aminen enthält.

3. Verfahren zur Herstellung eines (Co)polymers aus einer vernetzbaren Zubereitung nach Anspruch 2, in welchem die (co)vernetzbaren Verbindungen bis zum 25 Mol% der Zubereitung, bezogen auf die Mole an Biscitraconimid, ausmachen und zusätzlich gewählt werden können aus der Gruppe bestehend aus Triallylcyanurat, Triallylisocyanurat, Styrol, Styrolderivate, Inden, und Diisopropenylbenzol.

4. Verfahren zur Herstellung eines (Co)polymers aus einer vernetzbaren Zubereitung nach den Ansprüchen 1 bis 3, wobei D gewählt ist aus der Gruppe bestehend aus substituierten oder unsubstituierten zweiwertigen aliphatischen Gruppen, Oligomeren von Biscitraconimiden und Resten von einer oder mehreren (co)vernetzbaren Substanz(en) und bis Biscitraconimid-oligomeren.

5. Verfahren zur Herstellung eines (Co)polymers aus einer vernetzbaren Zubereitung nach den Ansprüchen 1 bis 4, wobei der anionische Vernetzungskatalysator gewählt ist aus der Gruppe bestehend aus Diazobicycloalkanen, substituierten Imidazolen, dem Alkalisalz von t-Butanol, Methanol, Ethanol und Triphenylphosphin.

6. Verfahren zur Herstellung eines (Co)polymers aus einer vernetzbaren Zubereitung nach den Ansprüchen 1 bis 4, wobei 0,01 bis 3,0 Gew.% an anionischem Vernetzungskatalysator vorhanden sind, um mindestens 40 % der R-Gruppen der Biscitraconimid-Einheiten in Alkylenbrücken in der gehärteten Zubereitung umzuwandeln.

7. Verfahren nach den Ansprüchen 1 bis 6, bei welchem die vernetzbare Zubereitung ausserdem Faserarmierung enthält.

8. Verfahren nach den Ansprüchen 1 bis 6 mit dem zusätzlichen Schritt der Imprägnierung von Fasern mit der vernetzbaren Zubereitung und Vernetzen des imprägnierten Materials bei einer erhöhten Temperatur.

9. Verfahren zur Verwendung einer polymeren Zubereitung wesentlich bestehend aus mindestens zwei Einheiten, die abgeleitet sind von einem Biscitraconimid der Formel 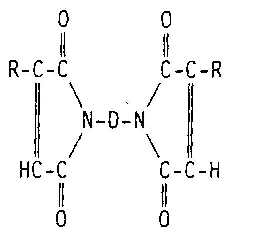 in der D eine zweiwertige Gruppe, R = CH2R1, und R1 unabhängig gewählt ist aus der Gruppe bestehend aus Wasserstoff und Alkylgruppen mit 1 bis 18 Kohlenstoffatomen, wobei mindestens 10 % der R-Gruppen an den Biscitraconimid-Einheiten in Alkylenbrücken in der vernetzten Zubereitung umgewandelt werden.

10. Verfahren zur Verwendung einer vernetzbaren Zubereitung nach Anspruch 9, bei welchem die polymere Zubereitung ausserdem bis zum 40 Mol% Einheiten enthält, die abgeleitet sind von einer oder mehreren (co)vernetzbaren Verbindung(en) gewählt aus der Gruppe bestehend aus Bismaleimiden, Bisitaconimiden, Itaconsäuremaleimiden, Citraconsäuremaleimiden, Itaconsäure/Citraconsäureimiden, Bis(allyltrimellitatimiden) und aliphatischen oder aromatischen Diaminen.

11. Verfahren zur Verwendung einer polymeren Zubereitung nach Anspruch 9, bei welchem die polymere Zubereitung ausserdem bis zu 25 Mol% Einheiten enthält, die von einer oder mehreren (co)vernetzbaren Verbindung(en) abgeleitet sind, die gewählt sind aus der Gruppe bestehend aus Triallylcyanurat, Triallylisocyanurat, Styrol, Styrolderivate, Inden, und Diisopropenylbenzol.

12. Verfahren zur Verwendung einer polymeren Zubereitung nach einem der Ansprüche 9 oder 10, bei welchem D eine zweiwertige Gruppe darstellt, die gewählt ist aus der Gruppe bestehend aus Tetramethylen, Pentamethylen, Hexamethylen, 2-Methylpentamethylen, Neopentylen, (2,2,4-Trimethyl)-hexamethylen, 1,3-Bis(methylen)-cyclohexan, 4,4'-Methylen-bis-2-methylcyclohexan, 2,2-Dicyclohexylpropylen, meta-Xylylen und Tricyclododecylen.

13. Verfahren zur Verwendung einer polymeren Zubereitung nach einem der Ansprüche 9 bis 11, bei welchem mindestens 40 % der R-Gruppen an den Biscitraconimid-Einheiten in Alkylenbrücken in der polymeren Zubereitung umgewandelt werden.

## Revendications (Revendications pour l'(les) Etat(s) contractant(s) suivant(s): BE, CH, DE, FR, GB, IT, LI, SE)

1. Une composition durcissable comprenant essentiellement au moins une unité biscitraconimide ayant la formule: 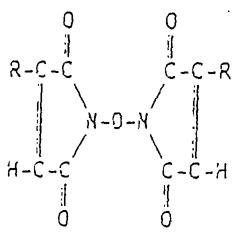 dans laquelle D est un groupe divalent, R est CH₂-R₁, et R₁ est choisi dans le groupe comprenant l'hydrogène et les groupes alkyles ayant de 1 à 18 atomes de carbone, caractérisée en ce que la composition comprend 0,01 à 3,0 % en poids d'un catalyseur de durcissement anionique pour convertir au moins 10 % des groupes R sur les unités biscitraconimides en ponts alkylènes dans la composition durcie.

2. Une composition durcissable selon la revendication 1, comprenant en outre jusqu'à 40 % molaire basé sur les moles de biscitraconimide d'un ou de plusieurs composés (co)durcissables choisis dans le groupe comprenant les suivants : bismaléimides, maléimides citraconiques, maléimides itaconiques, imides citraconiques/itaconiques, bis(imides de trimellitate d'allyle), bisitaconimides et amines aromatiques ou aliphatiques.

3. Une composition durcissable selon la revendication 2, selon laquelle les composés (co)durcissables constituent jusqu'à 25 % molaire de la composition basé sur les moles de biscitraconimides et peuvent additionnellement être choisis dans le groupe comprenant les suivants : cyanurate de triallyle, isocyanurate de triallyle, styrène, dérivés de styrène, indène, et diisopropénylbenzène.

4. Une composition durcissable selon l'une quelconque des revendications 1-3, selon laquelle D est choisi dans le groupe comprenant les groupes aliphatiques divalents subsitutés ou non substitués, les oligomères de biscitraconimides et les restes de un ou de plusieurs matériaux codurcissables et les oligomères de biscitraconimide

5. Une composition durcissable selon l'une quelconque des revendications 1-4 qui comprend 0,01 à 3,0 % en poids d'un catalyseur de durcissement anionique choisi dans le groupe comprenant les suivants : diazobicycloalcanes, imidazoles substitués, le sel alcalin de t-butanol, de méthanol, d'éthanol et triphénylphosphine.

6. Une composition durcissable selon l'une quelconque des revendications 1-4, selon laquelle 0,01 à 3,0 % en poids de catalyseur anionique de durcissement est présent pour convertir au moins 40 % des groupes R sur les unités biscitraconimides en ponts alkylènes dans la composition durcie.

7. Un procédé de préparation d'un (co)polymère contenant au moins une unité dérivée d'un biscitraconimide, caractérisé en ce qu'une composition selon l'une quelconque des revendications 1-6 est durcie à une température au-dessus du point de fusion de l'unité biscitraconimide.

8. Un article manufacturé obtenu par durcissement d'une ou de plusieurs compositions selon les revendications 1-6.

9. Un article manufacturé selon la revendication 8 comprenant en outre un renforcement fibreux.

10. Un préimprégné obtenu par imprégnation des fibres par une ou plusieurs compositions selon les revendications 1-6 et durcissement du matériau imprégné à une température élevée.

11. Une composition polymère comprenant essentiellement au moins deux unités dérivées d'un biscitraconimide ayant la formule: 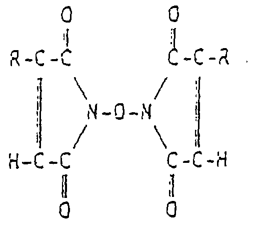 dans laquelle D est un groupe divalent, R est CH₂-R₁ et R₁ est choisi indépendamment dans le groupe comprenant l'hydrogène et les groupes alkyles ayant 118 atomes de carbone, caractérisée en ce qu'au moins 10 % des groupes R sur les unités biscitraconimides sont convertis en ponts alkylènes dans la composition polymère.

12. Une composition polymère selon la revendication 11, selon laquelle la composition polymère comprend également jusqu'à 40 % molaire d'unités dérivées d'un ou de plusieurs composés (co)durcissables choisis dans le groupe comprenant les suivants : bismaléimides, bisitaconimides, maléimides itaconiques, maléimides citraconiques, imides itaconiques/citraconiques, bis(imides de trimellitate d'allyle), et diamines aliphatiques ou aromatiques.

13. Une composition polymère selon la revendication 11, selon laquelle la composition polymère comprend également jusqu'à 25 % molaire d'unités dérivées d'un ou de plusieurs composés (co)durcissables choisis dans le groupe comprenant les suivants : cyanurate de triallyle, isocyanurate de triallyle, styrène, dérivés de styrène, indène, et diisopropénylbenzène.

14. Une composition polymère selon l'une quelconque des revendications 11 et 12, selon laquelle D est un groupe divalent choisi dans le groupe comprenant les suivants: tétraméthylène; pentaméthylène; hexaméthylène; 2-méthylpentaméthylène; néopentylène ; (2,2,4-triméthyl)hexaméthylène; 1,3-bis(méthylène)cyclohexane; 4,4'-méthylène-bis-2-méthylcyclohexane; 2,2-dicyclohexylpropylène ; métaxylylène et tricyclododécylène.

15. Une composition polymère selon l'une quelconque des revendications 11-13, selon laquelle au moins 40 % des groupes R sur les unités biscitraconimides sont convertis en ponts alkylènes dans la composition polymère.

## Revendications (Revendications pour l'(les) Etat(s) contractant(s) suivant(s): ES)

1. Un procédé de fabrication d'un (co)polymère à partir d'une composition durcissable comprenant essentiellement au moins une unité biscitraconimide ayant la formule: 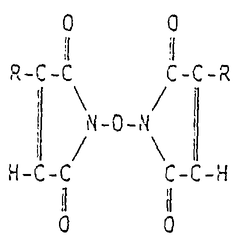 dans laquelle D est un groupe divalent, R est CH₂-R₁, et R₁ est choisi dans le groupe comprenant l'hydrogène et les groupes alkyles ayant de 1 à 18 atomes de carbone, caractérisé en ce que la composition est durcie à une température supérieure au point de fusion de l'unité biscitraconimide et en présence de 0,01 à 3,0 % en poids d'un catalyseur de durcissement anionique pour convertir au moins 10 % des groupes R sur les unités biscitraconimides en ponts alkylènes dans la composition durcie.

2. Un procédé de préparation d'un (co)polymère à partir d'une composition durcissable selon la revendication 1, selon laquelle la composition comprend également jusqu'à 40 % molaire, basé sur les moles de biscitraconimide, d'un ou de plusieurs composés (co)durcissables choisis dans le groupe comprenant les suivants : bismaléimides, maléimides citraconiques, maléimides itaconiques, imides citraconiques/itaconiques, bis(imides de trimellitate d'allyle), bisitaconimides, et amines aromatiques ou aliphatiques.

3. Un procédé de fabrication d'un (co)polymère à partir d'une composition durcissable selon la revendication 2, selon laquelle les composés (co)durcissables comprennent jusqu'à 25 % molaire d'une composition basée sur les moles de biscitraconimide et peuvent additionnement être choisis dans le groupe comprenant les suivants : cyanurate de triallyle, isocyanurate de triallyle, styrène, dérivés de styrène, indène, et diisopropénylbenzène.

4. Un procédé de fabrication d'un (co)polymère à partir d'une composition durcissable selon l'une des revendications 1-3, selon laquelle D est choisi dans le groupe comprenant les groupes aliphatiques divalents substitués ou non substitués, les oligomères de biscitraconimide et les restes de un ou plusieurs matériaux codurcissables et les oligomères de biscitraconimide.

5. Un procédé de fabrication d'un (co)polymère à partir d'une composition durcissable selon l'une des revendications 1-4, selon laquelle le catalyseur anionique de durcissement est choisi dans le groupe comprenant les suivants : diazobicycloalcanes, imidazoles substitués, le sel alcalin de t-butanol, de méthanol, d'éthanol et la triphénylphosphine.

6. Un procédé de fabrication d'un (co)polymère à partir d'une composition durcissable selon l'une des revendications 1-4, selon laquelle 0,01 à 3,0 % en poids de catalyseur anionique de durcissement est présent pour convertir au moins 40 % des groupes R sur les unités biscitraconimides en ponts alkylènes dans la composition durcie.

7. Un procédé selon l'une quelconque des revendications 1-6, selon laquelle la composition durcissable comprend également un renforcement fibreux.

8. Un procédé selon l'une quelconque des revendications 1-6, comprenant également l'étape d'imprégnation des fibres avec une composition durcissable et le durcissement du matériau imprégné à une température élevée.

9. Un procédé d'utilisation d'une composition polymère comprenant essentiellement au moins deux unités dérivées d'un biscitraconimide ayant la formule: 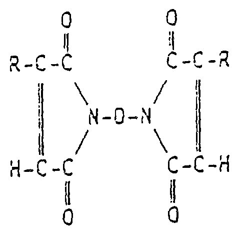 dans laquelle D est un groupe divalent, R est CH₂-R₁, et R₁ est choisi indépendamment dans le groupe comprenant l'hydrogène et des groupes alkyles ayant de 1 à 18 atomes de carbone, selon lequel au moins 10 % des groupes R sur les unités biscitraconimides sont convertis en ponts alkylènes dans la composition polymère.

10. Un procédé d'utilisation d'une composition polymère selon la revendication 9, selon laquelle la composition polymère comprend également jusqu'à 40 % molaire d'unités dérivées d'un ou de plusieurs composés (co)durcissables choisis dans le groupe comprenant les suivants : bismaléimides, bisitaconimides, maléimides itaconiques, maléimides citraconiques, imides itaconiques/citraconiques, bis(imides de trimellitate d'allyle), et diamines aliphatiques ou aromatiques.

11. Un procédé d'utilisation d'une composition polymère selon la revendication 9, selon laquelle la composition polymère comprend également jusqu'à 25 % molaire d'unités dérivées d'un ou de plusieurs composés (co)durcissables choisis dans le groupe comprenant les suivants : cyanurate de triallyle, isocyanurate de triallyle, styrène, dérivés de styrène, indène, et diisopropénylbenzène.

12. Un procédé d'utilisation d'une composition polymère selon l'une quelconque des revendications 9-10, selon laquelle D est un groupe divalent choisi dans le groupe comprenant les suivants : tétraméthylène ; pentaméthylène ; hexaméthylène ; 2-méthylpentaméthylène; néopentylène ; (2,2,4-triméthyl)hexaméthylène ; 1,3-bis(méthylène)-cyclohexane; 4,4'-méthylène-bis-2-méthylcyclohexane ; 2,2-dicyclohexylpropylène; métaxylylène et tricyclododécylène.

13. Un procédé d'utilisation de la composition polymère selon l'une quelconque des revendications 9-11, selon laquelle au moins 40 % des groupes R sur les unités biscitraconimides sont convertis en ponts alkylènes dans la composition polymère.
